**Europäisches Patentamt**

**European Patent Office**

**Office européen des brevets**

(19)

(11) Veröffentlichungsnummer: **0 103 686
B1**

## (12) EUROPÄISCHE PATENTSCHRIFT

(45) Veröffentlichungstag der Patentschrift:
**07.10.87**

(21) Anmeldenummer: **83106234.4**

(22) Anmeldetag: **27.06.83**

(51) Int. Cl.⁴: **B 62 D 55/24**

(54) **Fahrzeugraupe zur Verwendung auf schneelosem Sommerboden, als auch auf verschneitem Winterboden.**

(30) Priorität: **16.09.82 IT 2331182**

(43) Veröffentlichungstag der Anmeldung:
**28.03.84 Patentblatt 84/13**

(45) Bekanntmachung des Hinweises auf die Patenterteilung:
**07.10.87 Patentblatt 87/41**

(84) Benannte Vertragsstaaten:
**AT CH DE FR LI SE**

(56) Entgegenhaltungen:
**AU - B - 3 612 071
DE - A - 1 939 152
GB - A - 781 880
US - A - 3 477 767
US - A - 3 680 926
US - A - 3 930 689
US - A - 4 332 424**

(73) Patentinhaber: **Prinoth, Erich, Via Purger, 181,
I-39046 Ortisei (IT)**

(72) Erfinder: **Prinoth, Erich, Via Purger, 181, I-39046 Ortisei
(IT)**

(74) Vertreter: **Mayer, Hans Benno, Via dell'Orso 7/A,
I-20121 Milano (IT)**

## Beschreibung

Die vorstehende Erfindung betrifft eine Fahrzeugraupe, die sowohl auf schneelosem Sommerboden als auch auf verschneitem Winterboden verwendet werden kann.

Es ist bekannt, dass Fahrzeuge, die hauptsächlich in Gebirgsgegenden zum Einsatz kommen, mit Antriebsraupen ausgerüstet sind.

So sind sehr leichte Fahrzeuge, wie z.B. Motorschlitten mit einer Gummiraupe ausgerüstet, die im Inneren, eine ein geeignetes Profil aufweisende Verstärkung aufweist. Der Nachteil dieser bekannten Ausführungsform besteht darin, dass diese Raupe nur für sehr leichte Fahrzeuge einsetzbar ist, deren Antriebssystem kein allzu grosses Antriebsmoment auf den Boden übertragen muss.

Es sind ferner Pistenfahrzeuge bekannt, die Raupen aufweisen, die aus Metallstollen bestehen, die radial von dem elastisch ausgebildeten Raupengurt abstehen. Es ist einleuchtend, dass diese bekannte Raupenart kein Befahren unverschneiter, sommerlicher Flächen oder befestigter Strassen erlaubt, da eine äusserst störende Geräuschentwicklung durch die auf dem harten Untergrund abrollenden Stollen eintreten würde, und ferner sowohl der erdige Boden als auch die Strassendecke selbst eine Zerstörung oder Beschädigung erfahren würden. Ferner würde bei derartigen Fahrzeugraupen eine nicht zulässige Abnützung der Metallstollen, die bei diesen Geräten in vorteilhafter Weise aus Aluminium besteht, eintreten.

Es ist eine weitere Ausführungsform für eine Raupe bekannt geworden, die beispielsweise für Panzerfahrzeuge Verwendung findet und bei der eine aus Metallgliedern bestehende Raupe zum Einsatz kommt. Diese Metallglieder sind mit einem Spezialgummibelag, der besonders widerstandsfähig gegen Abrieb ist, überzogen. Mit dieser Ausführungsform wird hinsichtlich der Geräuschentwicklung beim Abrollen der Raupe, gegenüber einer aus Metallgliedern bestehenden Raupe, wesentliche Vorteile erzielt, jedoch ist diese bekannte Raupe ausgesprochen schwer und weist eine kurze Lebensdauer, aufgrund der hohen spezifischen Belastung auf, die auf die Gummiflächen einwirken, und von den steifen und harten Metallgliedern übertragen wird und somit zu einem alsbaldigen Verschleiss des Gummiüberzuges führt.

Aufgabe der vorstehenden Erfindung ist es, die Nachteile des Standes der Technik zu vermeiden und eine Raupe für ein Fahrzeug vorzuschlagen, um dessen Einsatz sowohl als Geländewagen als auch als Fahrzeug zum Befahren geteerter Strassen ermöglicht, und die geschilderten Nachteile des Standes der Technik zu vermeiden, und ferner auch die Möglichkeit schafft, mit der gleichen Raupe sowohl unverschneiten, sommerlichen Boden und Strassen als auch winterliche, verschneite Flächen zu befahren, und gleichzeitig ein hohes Antriebsmoment auf den Boden zu übertragen und einen ruhigen Lauf des Fahrzeuges zu gewährleisten, um auf den Austausch der Raupe während der warmen und der kalten Jahreszeiten verzichten zu können.

Aus der DE-A-1 939 152 ist eine Gleiskette oder Gummiraupe bekannt geworden, die im wesentlichen aus zwei in Längsrichtung verlaufenden Gurten besteht, die querlaufende Gummirippen aufweisen. In jeder Rippe ist ein Metallrohr eingebettet, das zwischen den Gurten angeordnete Antriebszapfen aufnimmt, die mit einem Antriebsrad in Wirkverbindung treten.

Der in dieser Entgegenhaltung beschriebene Gummigurt ist mehrschichtig ausgebildet, um in den querliegenden Rippen Versteifungs- und Verbindungsrohre aufnehmen zu können. Diese Bauart führt zu ausgesprochen hohen Fertigungskosten, desweiteren besteht die Gefahr, dass bei Abnutzen der querliegenden Laufrippen das Verstärkungsrohr frei zu liegen kommt und damit die Gefahr eines Ablösens vom Gummigurt nicht auszuschliessen ist, dadurch ist die sichere Übertragung des Antriebsmomentes auf die Raupe nicht mehr gewährleistet.

Die vom Stand der Technik her bekannte Antriebsraupe weist nicht jene besonders vorteilhafte Kombination von zusammenwirkenden Gummistollen und Versteifungsprofilen aus Metall auf, wo bei Befahren einer Strasse lediglich die vorstehenden Gummistollen zum Tragen kommen, hingegen beim Befahren eines Schneefeldes oder eines weichen Untergrundes sowohl die Gummistollen als auch die querliegenden Metallprofile in den Boden eingreifen und zum Antrieb genützt werden können.

Im Vergleich mit dem aus der DE-A-1 939 152 bekannten Stand der Technik, der eine Fahrzeugraupe zum Befahren, sowohl eines unverschneiten Sommerbodens als auch eines verschneiten Winterbodens betrifft, bestehend aus zwei parallel nebeneinander angeordneten Halbraupen, aus deren Laufflächen Gummirippen abstehen, wobei die Halbraupen in Querrichtung über starre, metallische Verbindungsprofile verbunden sind, deren Bauhöhe kleiner als die Bauhöhe der Gummirippen des Laufprofiles ist und wobei in dem zwischen den Halbraupen gebildeten Zwischenraum durch die starren Verbindungsprofile Übertragungsmittel gebildet werden, die mit einem Antriebszahnrad in Wirkverbindung stehen, ist die Erfindung dadurch gekennzeichnet, dass die Verbindungsprofile zwischen aufeinanderfolgenden, querliegenden Reihen der Gummirippen angeordnet sind, und die Verbindungsprofile derartig angeordnet sind, dass sie abwechselnd vollständig eine der Halbraupen abdecken, während die verbleibende, daneben liegende Halbraupe nur teilweise vom entsprechenden Endstück des Verbindungsprofiles abgedeckt wird. In vorteilhafter Weise ist vorgesehen, dass die Verbindungsprofile im Bereich des das Antriebszahnrad aufnehmenden und zwischen den Halbraupen gebildeten Zwischenraumes, grösste Abmessungen und grössten Widerstand gegenüber mechanischen Belastungen aufweisen, und dass sich das Verbindungsprofil zu seinem am weitesten vom Antriebsrad entfernt liegenden Ende allmählich im Profil verjüngt und abflacht.

Des weiteren ist es vorteilhaft, dass das Verbindungsprofil U-Form aufweist, und dass die Gummirippen ungefähr um 45° gegenüber der Laufrichtung der Fahrzeugraupe geneigt sind und ein gepfeiltes Laufprofil bilden.

Der Erfindungsgegenstand wird nun genauer anhand eines Ausführungsbeispiels beschrieben und in den Zeichnungen dargestellt.

Es zeigen:

Fig. 1 eine Draufsicht der erfindungsgemässen Raupe, die aus zwei Halbraupen gebildet ist; und

Fig. 2 in vergrössertem Massstab ein Detail der Raupe, im Schnitt entlang der Linie II–II der Fig. 1.

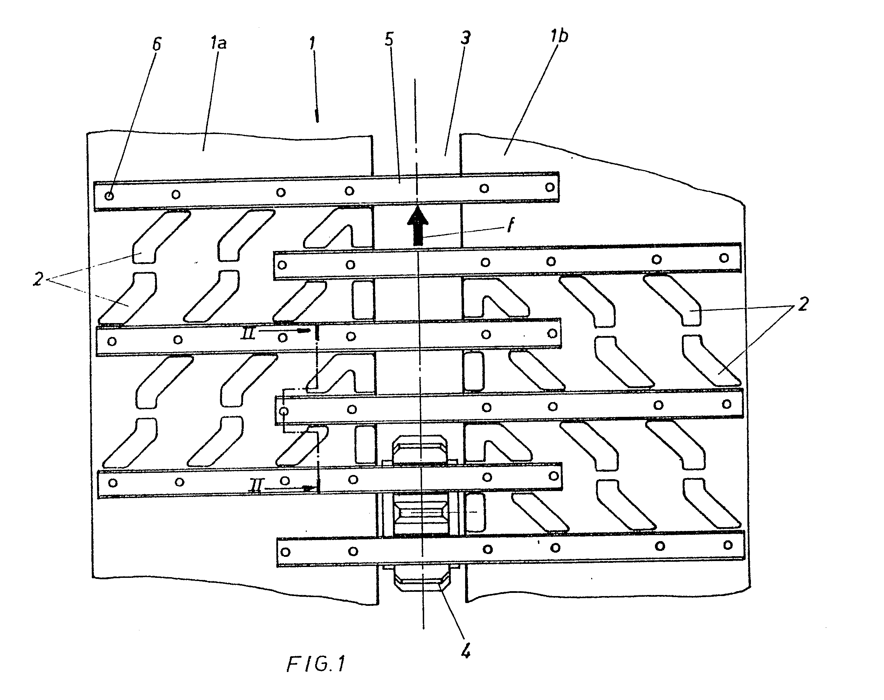

Wie der Fig. 1 zu entnehmen ist, besteht die gesamthaft mit 1 bezeichnete Raupe aus einer ersten Halbraupe 1a und einer zweiten Halbraupe 1b. Die Halbraupen 1a und 1b bestehen aus elastischem Material, z.B. aus verstärkten Gummigurten und, auf der Lauffläche sind Stollen oder Rippen 2 vorgesehen, die das Laufprofil der Raupe bilden. Die Stollen 2 stehen aus der Grundfläche der Halbraupen 1a und 1b hervor. Die Lauffläche der Raupen entspricht in der Fig. 1 der Zeichnungsebene. Die Stollen 2 sind geneigt gegenüber der Laufrichtung f der Raupe 1 angeordnet. Somit wird einmal ein «gepfeiltes» Laufprofil erhalten und, durch die geneigte Anordnung der Stollen 2, wie dies aus der Zeichnung entnehmbar ist, wird der Vorteil erzielt, dass eventuelle Schneeansammlungen von der Mitte der Raupe zur äusseren Seite der Raupe abgefördert werden. Die zwei Halbraupen 1a und 1b sind auf gegenseitigem Abstand angeordnet um eine Freizone 3 zu schaffen, in der ein Zahnrad 4 angeordnet ist, das vom Fahrzeugmotor (nicht dargestellt) in Drehbewegung versetzt wird.

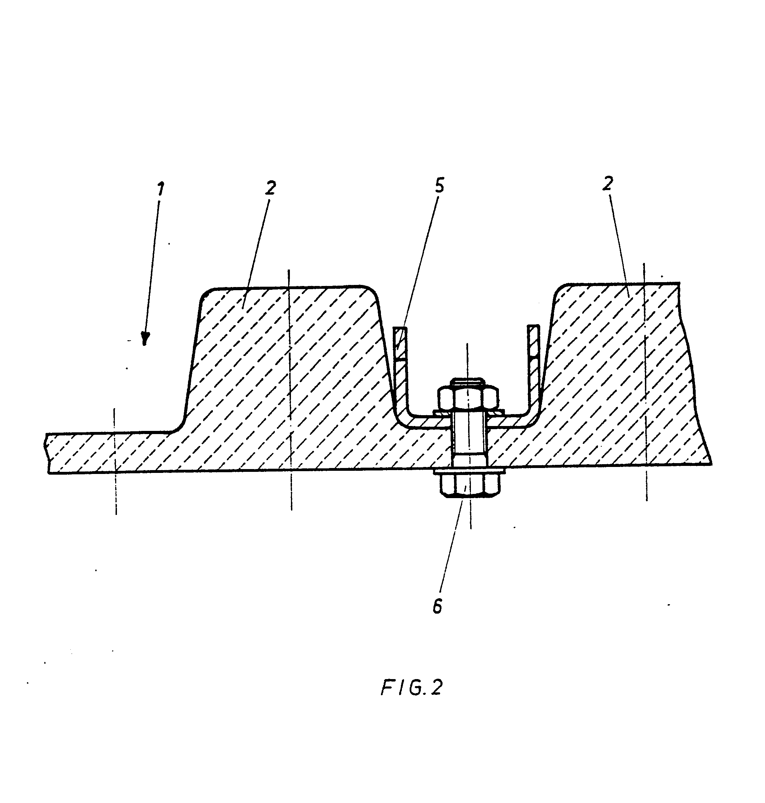

Unter Zuhilfenahme von Querprofilen 5, die in vorteilhafter Weise U-förmig ausgebildet sind, werden die Halbraupen 1a und 1b miteinander verbunden. Wie den Figuren 1 und 2 zu entnehmen ist, erfolgt die Verbindung zwischen den Versteifungsprofilen 5, die in vorteilhafter Weise aus Metall bestehen, und den Halbraupen 1a und 1b unter Verwendung von durchgehenden Schrauben oder Nieten, die mit dem Bezugszeichen 6 gekennzeichnet sind. Aus der Fig. 1 kann deutlich entnommen werden, dass die Profile 5 quer zu den Halbraupen 1a und 1b, im wesentlichen senkrecht zur Fahrtrichtung f angeordnet sind, und diese Profile 5 sind stets zwischen einer Stollenreihe 2 und einer anschliessenden Stollenreihe angeordnet. Zu diesem Zwecke ist die erste Stollenreihe in einem gewissen Abstand von der darauffolgenden Stollenreihe 2 angeordnet.

Aus der Fig. 2 kann ferner entnommen werden, dass stets abwechselnd ein Querprofil 5 vollständig die entsprechende Halbraupe 1a überquert und in diesem Falle nur beschränkt die Lauffläche der Halbraupe 1b abdeckt, wogegen das folgende Querprofil 5 vollständig die Halbraupe 1b überquert und nur mit ihrem Ende teilweise die benachbarte Halbraupe 1a abdeckt. Mit dieser Anordnung der Querprofile 5 wird eine feste Verbindung zwischen den Halbraupen 1a und 1b und dem Querprofil 5 im Bereiche der grössten Belastung erzielt, d.h. in der Nähe des freien Zwischenraumes 3, in dem das Antriebszahnrad 4 angeordnet ist. Die verbleibenden Bereiche der Halbraupe 1a bzw. der Halbraupe 1b werden hingegen nicht übermässig vom Querprofil 5 abgedeckt, wodurch die Möglichkeit freibleibt, eine grösstmögliche Anzahl von Stollen 2 vorzusehen, die eine grössere elastische Auflagefläche und Abrollfläche ermöglichen.

In vorteilhafter Weise, in Übereinstimmung mit dem Antriebszahnrad 4, weisen die Versteifungsprofile 5 ihre maximale Bauhöhe auf, während das Versteifungsprofil 5 in seiner Höhe (oder auch in seiner Breite) in Richtung seines Endstückes, das im Abstand vom Antriebszahnrad 4 angeordnet ist, abnimmt, da hier eine wesentlich geringere mechanische Belastung des Profils 5 erfolgt.

Der Fig. 2 kann noch einmal im Detail entnommen werden, wie zwischen den Stollen 2 der Raupe 1, die aus elastischem Material, z.B. aus verstärktem Gummi hergestellt ist, das Querprofil 5 unter Verwendung von durchgehenden Befestigungsschrauben, die gesamthaft mit 6 bezeichnet sind, verbunden ist. Selbstverständlich können als Verbindungs- und Befestigungsmittel auch Niete oder andere geeignete Mittel Verwendung finden.

Der Fig. 1 ist ferner zu entnehmen, dass die Stollen 2 eine wesentlich grössere Bauhöhe als die abstehenden Arme des U-förmigen Profils 5 aufweisen. Durch diese Massnahme können die Gummistollen 2 leise auf nicht verschneitem Sommerboden abrollen, ohne dass dabei die Gefahr eines zu starken Abriebes aufgrund von Spitzenbelastungen, die bei der erfindungsgemässen Ausführungsform durch die Profilleisten 5 aufgenommen werden, auftritt. Ferner erfolgt auch keine störende Geräuschbildung, da die Metallprofile 5 normalerweise nicht mit dem Boden in Berührung kommen. Gleichzeitig, dank der Vorsehung der Querprofile 5, die zwischen die von der Raupe 1 abstehenden Stollen angeordnet sind, wird es ermöglicht, über das Antriebszahnrad 4 ein hohes Drehmoment auf die Raupen 1a und 1b zu übertragen und, dank der versetzten Anordnung der Profilleisten 5 wird gewährleistet, dass die Raupen 1a und 1b ihre gewünschte Elastizität nicht verlieren, aber gleichzeitig wird es ermöglicht, dass auf die Raupen 1a und 1b erhebliche Antriebskräfte gleichmässig übertragen werden können.

Die erfindungsgemässe Antriebsraupe 1, dank der besonderen Kombination von zwei Halbraupen 1a und 1b, die mit vorstehenden Profilstollen versehen sind, mit quer angeordneten metallischen Profilleisten für die Verstärkung der Raupe und die Kraftübertragung, sowie die Vorsehung einer versetzten Anordnung der Verstärkungsprofile und ihre Anordnung quer zur Fahrtrichtung des Fahrzeuges, kann auch hervorragend auf verschneitem Boden eingesetzt werden und, in besonderer Weise wird es möglich, abwechselnd verschneiten Boden, Felsflächen, geteerte Strassen oder nicht verschneites Gelände zu befahren. Die erfindungsgemässe Raupe 1 erlaubt in allen Fällen ein ruhiges und schnelles Befahren der verschiedenen Bodenflächen und gleichzeitig wird ein überraschend gutes Anhaften der Raupen am Boden festgestellt.

In vorteilhafter Weise verjüngen sich die abstehenden Stollen 2 konusartig vom Grund der Raupe aus, um eine möglichst hohe Elastizität der Raupe zu gewährleisten und ein gutes Anhaften am Boden zu gewährleisten. Ferner, dank der besonderen Anordnung der Stollen, die geneigt (um ca. 45°) und pfeilartig gegenüber der Laufrichtung (f) des Fahrzeuges angeordnet sind, wird weiterhin erzielt, dass Ansammlungen von Schnee und Erdbrocken nicht zu einem Verschmutzen und zu einem Schliessen des Profils führen, sondern dass diese Ansammlungen von den Raupen selbst zur Aussenseite der Raupe hin abgefördert werden.

Durch Ausrüsten eines Fahrzeuges mit den erfindungsgemässen Raupen 1 wird es erstmalig ermöglicht, das Fahrzeug sowohl während der Sommerzeit als auch in den Wintermonaten zu verwenden. Vom Antriebszahnrad 4 kann ein grosses Drehmoment auf die Halbraupen 1a und 1b übertragen werden, und diese Kräfte werden gleichmässig verteilt auf den Boden übertragen, da alle vom Antriebszahnrad übertragenen Kräfte erst vom Querprofil oder Versteifungsprofil aufgenommen werden, und im Anschluss daran auf die Bänder oder Teilraupen 1a und 1b in gleichmässiger Weise über die Verbindungselemente 6, die die Querprofile 5 fest mit den Teilraupen 1a und 1b verbinden, übertragen. Die erfindungsgemässe Raupe 1 hat ferner den Vorteil, dass sie keine starren, in die Halbraupen 1a und 1b eingegossenen Versteifungsteile benötigt; das Auswechseln der querliegenden Versteifungsprofile 5, sowie der Halbraupen 1a und 1b ist in schneller und einfacher Weise durchführbar.

**Patentansprüche**

1. Fahrzeugraupe (1) zum Befahren sowohl eines unverschneiten Sommerbodens als auch eines verschneiten Winterbodens, bestehend aus zwei parallel nebeneinander angeordneten Halbraupen (1a, 1b), aus deren Laufflächen Gummirippen (2) abstehen, wobei die Halbraupen (1a, 1b) in Querrichtung über starre, metallische Verbindungsprofile (5) verbunden sind, deren Bauhöhe kleiner als die Bauhöhe der Gummirippen (2) des Laufprofils ist und wobei in dem zwischen zwei Halbraupen (1a, 1b) gebildeten Zwischenraum (3), durch die starren Verbindungsprofile (5) Übertragungsmittel gebildet werden, die mit einem Antriebszahnrad (4) in Wirkverbindung stehen, dadurch gekennzeichnet, dass die Verbindungsprofile (5) zwischen aufeinanderfolgenden, querliegenden Reihen der Gummirippen (2) angeordnet sind, und die Verbindungsprofile (5) derartig angeordnet sind, dass sie abwechselnd vollständig eine der Halbraupen (1a, 1b) abdecken, während die verbleibende, daneben liegende Halbraupe (1a, 1b) nur teilweise vom entsprechenden Endstück des Verbindungsprofiles abgedeckt wird.

2. Fahrzeugraupe nach Anspruch 1, dadurch gekennzeichnet, dass die Verbindungsprofile (5), im Bereich des das Antriebszahnrad (4) aufnehmenden und zwischen den Halbraupen gebildeten Zwischenraumes (3) grösste Abmessungen und grössten Widerstand gegenüber mechanischen Belastungen aufweisen, und dass sich das Verbindungsprofil (5) zu seinem am weitesten vom Antriebsrad entfernt liegenden Ende, allmählich im Profil verjüngt und abflacht.

3. Fahrzeugraupe nach Patentanspruch 1 und 2, dadurch gekennzeichnet, dass jedes Verbindungsprofil (5) U-Form aufweist, und dass die Gummirippen (2) ungefähr um 45° gegenüber der Laufrichtung (F) der Fahrzeugraupe geneigt sind und ein gepfeiltes Laufprofil bilden.

**Claims**

1. A vehicle track (1) for use on soil with or without snow, consisting of two half tracks (1a, 1b) disposed side by side in parallel relationship with rubber ribs (2) projecting from their running surfaces, the half tracks (1a, 1b) being transversely connected via rigid metal connecting profiles (5), of an overall height less than the overall height of the rubber ribs (2) of the running profile, transmission means being formed by the rigid connecting profiles (5) in the intermediate space (3) formed between two half tracks (1a, 1b), said transmission means being operatively connected to a driving gear (4), characterised in that the connecting profiles (5) are disposed between successive transverse rows of rubber ribs (2) and the connecting profiles (5) are so disposed as to cover one of the half tracks (1a, 1b) completely alternately while the remaining half track (1a, 1b) disposed next to the same is only partially covered by the corresponding end piece of the connecting profile.

2. A vehicle track according to claim 1, characterised in that the connecting profiles (5) have the maximum dimensions and maximum resistance to mechanical loads in the region of the intermediate space (3) which is formed between the half tracks and which accommodates the drive gear (4), and the connecting profile (5) gradually tapers and flattens in section towards its end farthest away from the drive gear.

3. A vehicle track according to claims 1 and 2, characterised in that each connecting profile (5) is of U-shape and the rubber ribs (2) are inclined approximately at an angle of 45° to the running direction (F) of the vehicle track and form a running profile of arrow shape.

**Revendications**

1. Chenille de véhicule (1) pour parcourir à la fois un sol estival non-enneigé et un sol hivernal enneigé, comprenant deux demi-chenilles (1a, 1b) disposées parallèlement l'une à côté de l'autre, des surfaces de roulement desquelles font saillie des nervures de caoutchouc (2), les demi-chenilles (1a, 1b) étant reliées, en direction transversale, par des profilés de liaison métalliques rigides (5) dont la hauteur totale est inférieure à la hauteur totale des nervures de caoutchouc (2) du profil de roulement et des moyens de transmission en liaison dynamique avec un pignon d'entraînement (4) étant formés par les profilés de liaison rigides (5) dans l'intervalle formé entre les deux demi-chenilles (1a, 1b), caractérisée en ce que les profilés de liaison (5) sont placés entre des rangées de nervures de caoutchouc (2) transversales successives, et en ce que les profilés de liaison (5) sont disposés de façon à recouvrir alternativement complètement l'une des demi-chenilles (1a, 1b), tandis que la demi-chenille (1a, 1b) contiguë restante n'est recouverte que partiellement par la section terminale correspondante du profilé de liaison.

2. Chenille selon la revendication 1, caractérisée en ce que les profilés de liaison (5) présentent, dans la zone de l'intervalle (3) recevant le pignon d'entraînement (4) et formé entre les chenilles, de très grandes dimensions et une très forte résistance aux contraintes mécaniques, et en ce que le profilé de liaison (5) a un profil qui s'amincit et s'aplatit progressivement vers son extrémité la plus éloignée de la roue d'entraînement.

3. Chenille selon les revendications 1 et 2, caractérisée en ce que chaque profilé de liaison (5) présente une forme en U, et en ce que les nervures de caoutchouc (2) sont inclinées d'environ 45° par rapport à la direction de déplacement (F) de la chenille et forment un profil de roulement en flèche (ou en delta).

FIG.1

FIG.2